# EUROPEAN PATENT APPLICATION

(11) **EP 4 322 660 A1**
(43) Date of publication of application: **14.02.2024**
(21) Application number: 22784051.9
(22) Date of filing: 06.04.2022
(51) Int. Cl.: H04W 72/04, H04W 72/12, H04L 5/00

(54) **IAB INDICATION METHOD AND APPARATUS, DEVICE, AND MEDIUM**

(30) Priority: 06.04.2021 CN 202110369448
(71) Applicant: Vivo Mobile Communication Co., Ltd., Dongguan, Guangdong 523863 (CN)
(72) Inventor: WANG, Huan, Dongguan, Guangdong 523863 (CN); LIU, Jinhua, Dongguan, Guangdong 523863 (CN)
(74) Representative: Murgitroyd & Company
(86) International application number: PCT/CN2022/085337
(87) International publication number: WO 2022/213985

(57) **Abstract**

This application discloses an IAB indication method and apparatus, a device and a medium. The IAB indication method in embodiments of this application includes: in a case of beam multiplexing between DU and MT, a first IAB node performing: reporting a first signaling to a parent IAB node, and/or obtaining target indication information. The first signaling includes a first transmit beam direction and/or a second transmit beam direction. The first signaling is effective for at least one of: a target multiplexing mode, a target time, and a target frequency domain resource. The target indication information is used for indicating any one of: a first condition, an RS measurement being for the target multiplexing mode when resources for measuring reference signals RS are configured, and uplink or downlink beam information of the DU of the parent IAB node. The first condition includes at least one of: a first interference being less than or equal to a first preset threshold, an amount of interference variation being less than or equal to a preset offset threshold, and a communication channel quality satisfying a preset transmission condition.

## Description

### CROSS-REFERENCE TO RELATED APPLICATION

This application claims priority to Chinese Patent Application No. 202110369448.0, filed in China on April 06, 2021, which is incorporated herein by reference in its entirety.

### TECHNICAL FIELD

This application relates to the field of communication technologies, and in particular, to an IAB indication method, an IAB indication apparatus, a device and a medium.

### BACKGROUND

In a communication system, an integrated access backhaul (integrated access backhaul, IAB) node includes two functional portions, i.e., a distributed unit (distributed unit, DU) and a mobile termination (mobile termination, MT). For a case of resource multiplexing/sharing between the DU and the MT, since available beams of the DU and the MT are limited by hardware resources, and the DU and the MT have an interference therebetween, an efficiency of the beam usage of the DU and the MT is reduced, thereby resulting in a low uplink transmission efficiency and a low downlink transmission efficiency.

### SUMMARY

Embodiments of this application provide an IAB indication method and apparatus, a device and a medium, that are capable of solving a problem of a low efficiency of uplink and downlink transmissions in a case of beam multiplexing between DU and MT.

In a first aspect, the IAB indication method is provided. The method includes: in a case of beam multiplexing between DU and MT, a first IAB node performing at least one of: reporting a first signaling to a parent IAB node, and obtaining target indication information. The first signaling includes at least one of: a first transmit beam direction and a second transmit beam direction. The first transmit beam direction is a downlink transmit beam direction of DU of the parent IAB node, and the second transmit beam direction is an uplink transmit beam direction of MT of the first IAB node. The first signaling is effective for at least one of: a target multiplexing mode, a target time, and a target frequency domain resource. The target multiplexing mode is a multiplexing mode corresponding to the DU of the parent IAB node and the MT of the first IAB node. The target indication information is used for indicating any one of: a first condition, an RS measurement being for the target multiplexing mode when resources for measuring reference signals RS are configured, and uplink or downlink beam information of the DU of the parent IAB node. The first condition is used for the first IAB node to control an interference to a reception of the MT of the first IAB node. The first condition includes at least one of: a first interference being less than or equal to a first preset threshold, an amount of interference variation being less than or equal to a preset offset threshold, and a communication channel quality satisfying a preset transmission condition. The first interference is an interference of uplink and downlink transmissions of DU of the first IAB node on the reception of the MT of the first IAB node. The amount of interference variation is an amount of interference variation of the uplink and downlink transmissions of the DU of the first IAB node on the reception of the MT of the first IAB node. The communication channel quality is a communication channel quality from the DU of the parent IAB node to the MT of the first IAB node during the uplink and downlink transmissions of the DU of the first IAB node.

In a second aspect, an IAB indication apparatus is provided. The IAB indication apparatus includes a processing module. In a case of beam multiplexing between DU and MT, the processing module is used for performing at least one of: reporting a first signaling to a parent IAB node, and obtaining target indication information; The first signaling includes at least one of: a first transmit beam direction and a second transmit beam direction. The first transmit beam direction is a downlink transmit beam direction of DU of the parent IAB node, and the second transmit beam direction is an uplink transmit beam direction of MT of the first IAB node. The first signaling is effective for at least one of: a target multiplexing mode, a target time, and a target frequency domain resource. The target multiplexing mode is a multiplexing mode corresponding to the DU of the parent IAB node and the MT of the first IAB node. The target indication information is used for indicating any one of: a first condition, an RS measurement being for the target multiplexing mode when resources for measuring reference signals RS are configured, and uplink or downlink beam information of the DU of the parent IAB node. The first condition is used for the first IAB node to control an interference to a reception of the MT of the first IAB node. The first condition includes at least one of: a first interference being less than or equal to a first preset threshold, an amount of interference variation being less than or equal to a preset offset threshold, and a communication channel quality satisfying a preset transmission condition. The first interference is an interference of uplink and downlink transmissions of DU of the first IAB node on the reception of the MT of the first IAB node. The amount of interference variation is an amount of interference variation of the uplink and downlink transmissions of the DU of the first IAB node on the reception of the MT of the first IAB node. The communication channel quality is a communication channel quality from the DU of the parent IAB node to the MT of the first IAB node during the uplink and downlink transmissions of the DU of the first IAB node.

In a third aspect, an IAB node is provided. The IAB node includes a processor, a memory, and a program or an instruction stored in the memory and executable on the processor. When the program or the instruction is executed by the processor, the method in the first aspect is implemented.

In a fourth aspect, an IAB node is provided. The IAB node includes a processor and a communication interface. The communication interface is used for reporting a first signaling to a parent IAB node in a case of beam multiplexing between DU and MT; the first signaling includes at least one of: a first transmit beam direction and a second transmit beam direction; the first transmit beam direction is a downlink transmit beam direction of DU of the parent IAB node, and the second transmit beam direction is an uplink transmit beam direction of MT of the first IAB node; the first signaling is effective for at least one of: a target multiplexing mode, a target time, and a target frequency domain resource; the target multiplexing mode is a multiplexing mode corresponding to DU and MT; and/or the processor is used for obtaining the target indication information in the case of the beam multiplexing between DU and MT; the target indication information is used for indicating any one of: a first condition, an RS measurement being for the target multiplexing mode when resources for measuring reference signals RS are configured, and uplink or downlink beam information of the DU of the parent IAB node. The first condition is used for the first IAB node to control an interference to a reception of the MT of the first IAB node. The first condition includes at least one of: a first interference being less than or equal to a first preset threshold, an amount of interference variation being less than or equal to a preset offset threshold, and a communication channel quality satisfying a preset transmission condition. The first interference is an interference of uplink and downlink transmissions of DU of the first IAB node on the reception of the MT of the first IAB node. The amount of interference variation is an amount of interference variation of the uplink and downlink transmissions of the DU of the first IAB node on the reception of the MT of the first IAB node. The communication channel quality is a communication channel quality from the DU of the parent IAB node to the MT of the first IAB node during the uplink and downlink transmissions of the DU of the first IAB node.

In a fifth aspect, a readable storage medium is provided. The readable storage medium stores a program or an instruction. When the program or the instruction is executed by a processor, the method in the first aspect is implemented.

In a sixth aspect, a chip is provided. The chip includes a processor and a communication interface. The communication interface is coupled to the processor, and the processor is used for executing a program or an instruction to implement the method in the first aspect.

In a seventh aspect, a computer program/program product is provided. The computer program/program product is stored in a storage medium. When the program/program product is executed by at least one processor, the IAB indication method in the first aspect is implemented.

In the embodiments of this application, the first IAB node may report the first signaling to the parent IAB node and/or obtain the target indication information in the case of the beam multiplexing between DU and MT. Due to the beam multiplexing between DU and MT, the first IAB node may report the first transmit beam direction and/or the second transmit beam direction to the parent IAB node through the first signaling to lock the receive beam/transmit beam of IAB MT, so as to reserve receive beam resources/transmit beam resources for DU and improve the flexibility and the efficiency of the beam usage of DU and MT, thereby improving the efficiency of the uplink and downlink transmissions; and/or the first IAB node may obtain information such as the first condition, the RS measurement being for the target multiplexing mode, or the uplink or downlink beam information of the DU of the parent IAB node, so as to determine the beam information of the uplink and downlink transmissions of the DU based on such information for determining the beam information of the transmission of IAB MT, so that the interference between DU and MT is avoided, and the flexibility and the efficiency of the beam usage of DU and MT are improved, thereby improving the efficiency of the uplink and downlink transmissions.

### BRIEF DESCRIPTION OF THE DRAWINGS

FIG. 1 is a schematic architectural diagram of a communication system, in accordance with embodiments of this application.
FIG. 2 is a schematic architectural diagram of an IAB system, in accordance with embodiments of this application.
FIG. 3 is a schematic structural diagram of CUs and DUs of an IAB system, in accordance with embodiments of this application.
FIG. 4 is a schematic diagram of an IAB indication method, in accordance with embodiments of this application.
FIG. 5 is a schematic structural diagram of an IAB indication apparatus, in accordance with embodiments of this application.
FIG. 6 is a schematic diagram of a hardware structure of a communication device, in accordance with embodiments of this application.
FIG. 7 is a schematic diagram of a hardware structure of an IAB node, in accordance with embodiments of this application.

### DETAILED DESCRIPTION

Technical solutions in embodiments of this application will be described clearly below with reference to the accompanying drawings in the embodiments of this application. Obviously, the described embodiments are merely some but not all embodiments of this application. All other embodiments obtained by a person of ordinary skill in the art based on the embodiments of this application shall be included in the protection scope of this application.

In the description and the claims of this application, the terms such as "first" and "second" are used for distinguishing similar objects, but are unnecessarily used for describing a specific sequence or order. It will be understood that terms used in this way may be exchangeable in a proper case, so that the embodiments of this application may be implemented in an order different from the orders shown or described herein. Moreover, the objects distinguished by "first" and "second" are usually of the same type, and the number of the objects is not limited. For example, there may be one or more first objects. In addition, "and/or" in the description and the claims indicate at least one of connected objects, and the character "/" generally indicates an "or" relationship between associated objects.

It is worth pointing out that the techniques described in the embodiments of this application are not limited to long term evolution (long term evolution, LTE)/LTE-advanced (LTE-advanced, LTE-A) systems, but may also be used in other wireless communication systems, such as code division multiple access (code division multiple access, CDMA), time division multiple access (time division multiple access, TDMA), frequency division multiple access (frequency division multiple access, FDMA), orthogonal frequency division multiple access (orthogonal frequency division multiple access, OFDMA), single-carrier frequency-division multiple access (single-carrier frequency-division multiple access, SC-FDMA), and other systems. The terms "system" and "network" are often used interchangeably in the embodiments of this application, and the techniques described may be used for both the systems and radio techniques described above, as well as for other systems and radio techniques. For exemplary purposes below, a new radio (new radio, NR) system is described, and the NR term is used throughout most of the following description. However, these techniques may also be applied to applications except NR system applications, such as 6th generation (6th Generation, 6G) communication systems.

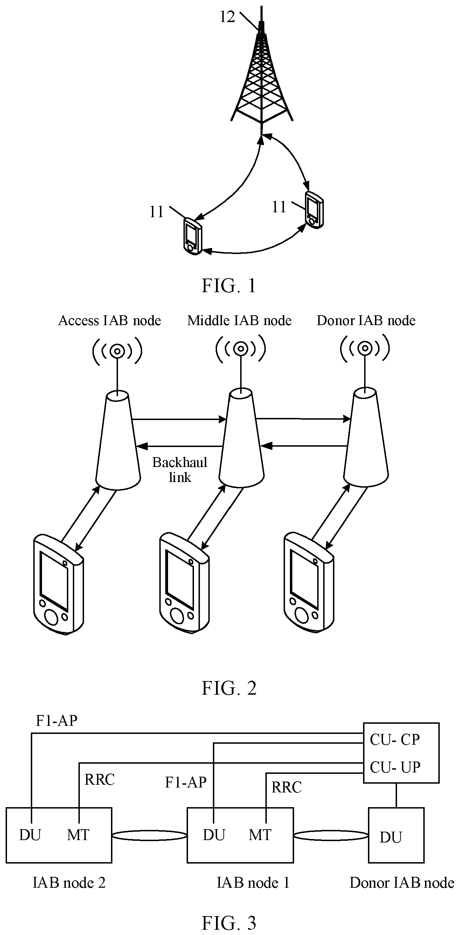

FIG. 1 is a schematic architectural diagram of a wireless communication system to which embodiments of this application may be applied. A wireless communication system includes a user equipment (user equipment, UE) 11 and a network device 12. The UE 11 may also be referred to as a terminal device or a terminal. The UE 11 may be a cell phone, a tablet computer (tablet computer), a laptop computer (laptop computer) or notebook computer, a personal digital assistant (personal digital assistant, PDA), a handheld computer, a netbook, an ultra-mobile personal computer (ultra-mobile personal computer, UMPC), a mobile Internet device (mobile Internet device, MID), a wearable device (wearable device) or a vehicle-mounted device (VLTE), a pedestrian terminal (PUE), and other terminal-side device. The wearable devices include: smartwatches, bracelets, headphones, glasses, etc. A specific type of the UE11 is not limited in the embodiments of this application. The network device 12 may be a base station or a core network. The base station may be referred to as a node B, an evolved node B, an access point, a base transceiver station (base transceiver station, BTS), a radio base station, a radio transceiver, a basic service set (basic service set, BSS), an extended service set (extended service set, ESS), a B node, an evolved B node (eNB), a home B node, a home evolved B node, a WLAN access point, a WiFi node, a transmitting receiving point (transmitting receiving point, TRP), or some other suitable term in the described field. As long as the same technical effect is achieved, the base station is not limited to a specific technical vocabulary. Only a base station in the NR system is taken as an example in the embodiments of this application, but a specific type of the base station is not limited.

Some concepts and/or terms involved in an IAB indication method, an IAB indication apparatus, a device, and a medium provided in the embodiments of this application will be described below.

### 1. IAB system

FIG. 2 is a schematic architectural diagram of an IAB system. An IAB node includes a DU functional portion and an MT functional portion. Relying on the MT, an access point (i.e., IAB node) may find an upstream access point (i.e., parent IAB node), and establishes a wireless connection with a DU of the upstream access point. This wireless connection is referred to as a backhaul link (backhaul link). After the IAB node establishes the entire backhaul link, the IAB node turns on the DU function thereof, and the DU provides cell services. That is, the DU may provide an access service to the UE. An integrated access backhaul loop includes a donor (donor) IAB node, and the donor IAB node is directly connected to a wire transmission network.

FIG. 3 is a schematic structural diagram of CUs and DUs of an IAB system. In an integrated access backhaul loop, DUs of all the IAB nodes are connected to a central unit (central unit, CU) node, which configures the DUs through an F1-application protocol (F1-application protocol, F1-AP) signaling. The CU configures MTs through a radio resource control (radio resource control, RRC) signaling. The donor IAB node does not have an MT function portion.

The IAB system is introduced to resolve an inadequate deployment of the wire transmission network during dense deployment of access points. That is, when there is no wire transmission network, an access point may rely on a wireless backhaul.

### 2. Multiplexing (duplexing) of DU and MT

Usually, a resource multiplexing between DU and MT of IAB is time-division multiplexing (time-division multiplexing, TDM). In order to realize a resource multiplexing of frequency-division multiplexing (frequency-division multiplexing, FDM)/space division multiplexing (space division multiplexing, SDM), there are following several synchronous transceiving operations of DU and MT.

For DU-TX and MT-TX: DU is configured for DL (downlink), and MT is configured for UL (uplink); or DU performs DL transmission, and MT performs UL transmission.

For DU-RX and MT-RX: DU is configured for UL, and MT is configured for DL; or DU performs UL reception, and MT performs DL reception.

For DU-TX and MT-RX: DU is configured for DL, and MT is configured for DL; or DU performs DL transmission, and MT performs DL reception.

For DU-RX and MT-TX: DU is configured for UL, and MT is configured for UL; or DU performs UL reception, and MT performs UL transmission.

### 3. Interference between DU and MT

In a case, when the transmission of IAB-DU and the reception of IAB-MT are performed synchronously, the transmission of IAB-DU causes interference to the reception of IAB-MT, especially when IAB-DU and IAB-MT share time-frequency resources (i.e., FDM/SDM multiplexing).

In another case, when the reception of IAB-DU and the transmission of IAB-MT are performed synchronously, the transmission of IAB-MT causes interference to the reception of IAB-DU, especially when IAB-DU and IAB-MT share the time-frequency resources (i.e., FDM/SDM multiplexing).

In yet another case, when the reception of IAB-DU and the reception of IAB-MT are performed synchronously, a transmission signal to IAB-DU also leaks to IAB-MT, which causes interference to the reception of IAB-MT, and vice versa, especially when IAB-DU and IAB-MT share the time-frequency resources (i.e., FDM/SDM multiplexing).

### 4. Uu beam alignment of NR

Considering downlink beam alignment as an example, the beam alignment is roughly divided into two phases. A first phase is to initially train an initial transmit beam from the base station to the UE when the UE is connected to the network. A second phase is to train a fine transceiver beam pair from the base station to the UE after the UE establishes the connection. The beam training in the second phase is mainly accomplished by CSI measurement and feedback.

For the first phase, the base station periodically transmits a synchronization signal block (synchronization signal block, SSB), and sends a group of SSBs in a beam scanning manner in each SSB transmission cycle. The UE measures reference signals respectively carried by the SSBs, and reports an index of an SSB with high reception energy, so that the base station determines its transmit beam. The UE reports an SSB index according to the rules specified in the protocol. Each SSB corresponds to a group of physical random access channel (physical random access channel, PRACH) resources. The UE sends a preamble for initial access on corresponding PRACH resources, which indicate that the UE reports a corresponding SSB index. For the second phase, the base station performs a configuration of channel state information (channel state information, CSI) reporting parameters, and triggers a CSI reporting. The UE performs the CSI measurement and reporting according to the configuration information of the base station. The base station adjusts transmission parameters such as uplink and downlink beams according to the results of the UE. The reporting configuration of each CSI indicates a type reported by CSI (CSI quantity), which includes parameters indicating the beam, such as CRI and SSB index.

For uplink beam training, the base station configures sounding reference signal (sounding reference signal, SRS) resources for the UE for the uplink beam training. The UE autonomously sends SRS on the corresponding SRS resources for the beam training. In addition, for the beam training on the base station/LTE, the base station/UE may select a training beam independently.

### 5. Uu beam indication of NR

For uplink beam indication, the base station indicates a beam direction used by the UE on a UL scheduling resource, and the beam direction is indicated by a sounding reference signal resource indicator (SRS resource indicator, SRI). For downlink beam indication, the base station indicates a beam direction on a DL scheduling resource, so that the UE is able to determine its receive beam. The downlink beam direction is indicated by an associated transmission configuration indication (transmission configuration indication, TCI), and the TCI reflects information such as CRI and SSB index.

The IAB indication method provided in the embodiments of this application will be described in detail below with reference to the accompanying drawings, by means of some embodiments and application scenarios thereof.

For the multiplexing of IAB DU and MT, beam directions of DU and MT are mutually constrained by the hardware resource sharing/multiplexing of DU/MT on one hand, and by interference conditions of DU/MT on another hand.

At present, for the case that the available beams of DU/MT are constrained by the hardware resources, if DU and MT perform transceiving in TDM, DU/MT may use hardware resources for beam forming separately, and DU may adopt narrower beams. If DU and MT perform transceiving synchronously (SDM/FDM), DU and MT need to share the hardware resources for beam forming, and DU/MT adopts wider beams. The existing beam training/beam indication assumes that there is no mutual constraint between the beams of the DU/MT, and the beam training/beam indication of the DU/MT is independent of each other. If related methods in related art are followed, the available beams/hardware resources between IAB DUs/MTs need to be allocated statically in advance, which cannot ensure the use efficiency of hardware resources/beam forming.

In addition, for DU and MT that are co-located, the interference to the reception of DU/MT is serious. An interference strength to the reception of MT is affected by the receive beam direction of MT/uplink and downlink beam directions of DU, and an interference strength to the reception of DU is affected by the receive beam direction of DU/uplink and downlink beam directions of MT. Therefore, from the interference point of view, the available beams of DU and MT are also mutually constrained.

In response to the above constraint relationship, embodiments of this application provide an enhancement mechanism of a beam management mechanism/interference management mechanism.

In response to the problem that the available beams of DU/MT are constrained by the hardware resources, a beam determination method is provided to improve an efficiency of beam multiplexing/hardware resource multiplexing between IAB DUs/MTs. Specifically, in a method, available beams/hardware resources (e.g., available panels) of IAB DU and/or available beams/hardware resources (e.g., available panels) of IAB MT are configured/indicated. In another method, the beam management mechanism is enhanced to make the beam multiplexing between DUs/MTs more flexible under a principle that IAB DU/MT decides available beams/training beams independently.

In response to the problem that the interference strength to the reception of the co-located DU/MT is affected by the beam direction of MT/DU, a beam determination method/a determination principle of transmission parameters (including beam and other parameters) is provided to mitigate the interference problem. Specifically, in a method, the available beams of IAB DU and/or IAB MT are configured/indicated to achieve the purpose of interference suppression. In another method, the beam management mechanism is enhanced under the principle that IAB DU/MT decides the available beams/training beams independently to achieve the purpose of interference suppression. In yet another method, the interference management mechanism is enhanced to achieve the purpose of interference suppression. That is, demand conditions are set for the reception of IAB MT to control the interference to the reception of IAB MT, so as to assist downlink scheduling of the parent IAB.

The IAB indication method provided in the embodiments of this application will be described in detail below with reference to the accompanying drawings, by means of specific embodiments and application scenarios thereof.

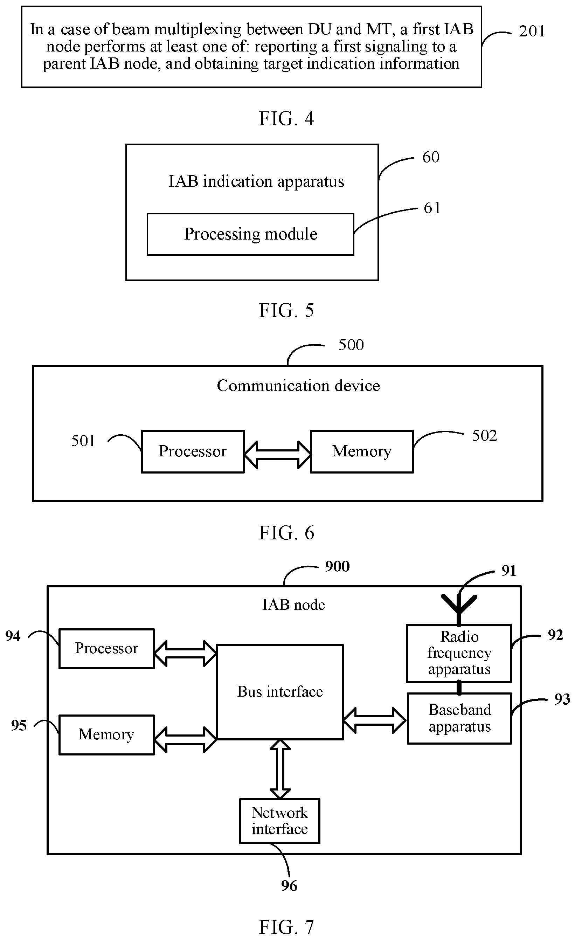

The embodiments of this application provide the IAB indication method. FIG. 4 illustrates a flow diagram of an IAB indication method provided in the embodiments of this application. As shown in FIG. 4, the IAB indication method provided in the embodiments of this application may include a following step 201.

In step 201, in a case of beam multiplexing between DU and MT, a first IAB node performs at least one of the following: reporting a first signaling to the parent IAB node, and obtaining target indication information.

In the embodiments of this application, the above first signaling includes at least one of the following: a first transmit beam direction and a second transmit beam direction. The first transmit beam direction is a downlink transmit beam direction of DU of the parent IAB node, and the second transmit beam direction is an uplink transmit beam direction of MT of the first IAB node. The first signaling is effective for at least one of the following: a target multiplexing mode (multiplexing case), a target time, and a target frequency domain resource. The target multiplexing mode is a multiplexing mode corresponding to DU and MT. The above target indication information is used for indicating any one of the following: a first condition, an RS measurement being for the target multiplexing mode when resources for measuring reference signals (RS) are configured, and uplink or downlink beam information of the DU of the parent IAB node. The above first condition includes at least one of the following: a first interference being less than or equal to a first preset threshold, an amount of interference variation being less than or equal to a preset offset threshold, and a communication channel quality satisfying a preset transmission condition. The first interference is an interference of the uplink and downlink transmissions of the DU of the first IAB node on the reception of the MT. The amount of interference variation is an amount of interference variation of the uplink and downlink transmissions of the DU on the reception of the MT. The communication channel quality is a communication channel quality from the DU of the parent IAB node to the MT during the uplink and downlink transmissions of the DU.

In the embodiments of this application, due to the beam multiplexing between DU and MT, the first IAB node reports through beams. That is, the first IAB node may report a downlink transmit beam direction (i.e., first transmit beam direction, as indicated by the TCI/CRI/SSB index) of a desired/available parent DU (i.e., DU of the parent IAB node) to the parent IAB node, so that the parent IAB node may determine a downlink beam of IAB MT (i.e., MT of the first IAB node). That is, a receive beam of IAB MT is locked to schedule an appropriate downlink beam for IAB MT, so as to reserve reception/transmit beam resources for DU and improve the flexibility of the multiplexing of the downlink beam of MT and the beam of DU.

In the embodiments of this application, due to the beam multiplexing between DU and MT, the first IAB node reports through beams. That is, the first IAB node may report a transmit beam direction (i.e., uplink beam/SRI of MT scheduled by parent DU, i.e., second transmit beam direction) of an uplink transmission of a desired/available IAB MT to the parent IAB node, so that the parent IAB node may lock a transmit beam of IAB MT to schedule an appropriate uplink beam for IAB MT, so as to reserve reception/transmit beam resources for DU and improve the flexibility of the multiplexing of the uplink beam of MT and the beam of DU.

In the embodiments of this application, the first IAB node, after obtaining the first condition in advance, may adjust the transceiving beam direction of IAB DU and uplink and downlink powers, so that the uplink and downlink transmissions of the DU of the first IAB node satisfy the first condition, so as to achieve the purpose of controlling the interference to the reception of the MT of the first IAB node. That is, in the case of beam multiplexing between DU and MT, the first IAB node may determine whether at least one of the corresponding interference, the amount of interference variation, and the communication channel quality satisfies the first condition during the uplink and downlink transmissions of DU, so as to control the interference to the reception of the MT of the first IAB node, so that the interference to the reception of IAB MT is ensured to be sufficiently small to improve the flexibility and efficiency of the beam usage of DU and MT, thereby improving the efficiency of the uplink and downlink transmissions.

In the embodiments of this application, the first IAB node, after obtaining in advance that the RS measurement is for the target multiplexing mode when the resources of the RS are configured, may determine beam information of the uplink and downlink transmissions of DU and MT to avoid the interference between DU and MT, so as to improve the flexibility and the efficiency of the beam usage of DU and MT, thereby improving the efficiency of the uplink and downlink transmissions.

In the embodiments of this application, the first IAB node, after obtaining the uplink or downlink beam information of the DU of the parent IAB node in advance, may determine the beam of IAB MT based on the uplink and downlink beam information of the DU, so as to avoid the interference between DU and MT and improve the flexibility and efficiency of the beam usage of DU and MT, thereby improve the efficiency of the uplink and downlink transmissions.

Optionally, in the embodiments of this application, the above target multiplexing mode includes at least one of the following:
a transceiving mode in which DU and MT perform the time division multiplexing;
a mode in which DU and MT perform the frequency division multiplexing;
a mode in which DU and MT perform the space division multiplexing;
a mode in which the transmission of DU and the transmission of MT are performed synchronously;
a mode in which the reception of DU and the reception of MT are performed synchronously;
a mode in which the transmission of DU and the reception of MT are performed synchronously; and
a mode in which the reception of DU and the transmission of MT are performed synchronously.

Optionally, in the embodiments of this application, the above first signaling is specifically any one of the following: uplink control information (uplink control information, UCI) and media access control control element (media access control control element, MAC CE).

Optionally, in the embodiments of this application, in a case where the above first signaling is specifically the MAC CE, the MAC CE is assigned an independent logical channel identification (logical channel ID, LCID).

Optionally, in the embodiments of this application, the first transmit beam direction is any one of the following, and/or the second transmit beam direction is any one of the following:
a beam used/scheduled by the DU of the parent IAB node;
a beam preferentially used/preferentially scheduled by the DU of the parent IAB node;
a beam that is cannot be used/cannot be scheduled by the DU of the parent IAB node; and
a beam low-priority used/low-priority scheduled by the DU of the parent IAB node.

Optionally, in the embodiments of this application, "reporting the first signaling to the parent IAB node" in the above step 201 may be specifically realized by the following step 201a.

In step 201a, the first IAB node reports the first signaling to the parent IAB node with respect to at least one of the target multiplexing mode, the target time and the target frequency domain resource.

In the embodiments of this application, the first IAB node may report beam direction(s) (i.e., the first transmit beam direction and/or the second transmit beam direction) for at least one of a multiplexing mode, a time and a frequency domain resource (may also be referred to as a frequency range), so that the parent IAB node may determine that the beam direction(s) are used at the time and/or the frequency range.

Optionally, in the embodiments of this application, the target time is associated with the target multiplexing mode, and/or the target frequency domain resource is associated with the target multiplexing mode.

Optionally, in the embodiments of this application, a separate field in the above first signaling carries indication information of at least one of the target multiplexing mode, the target time and the target frequency domain resource.

For example, the indication information of at least one of the target multiplexing mode, the target time and the target frequency domain resource may be carried by increasing the quantity (quantity) and content of CSI.

Optionally, in the embodiments of this application, if the time and/or frequency at which the resource for the RS measurement is located corresponds to the target multiplexing mode, the reporting for the RS measurement is for the target multiplexing mode.

Optionally, in the embodiments of this application, the target information associated with the first transmit beam direction and/or the second transmit beam direction is reported for the target multiplexing mode. The target information includes at least one of the following: a precoding matrix indicator (precoding matrix indicator, PMI), a rank indication (rank indication, RI), a channel quality indicator (channel quality indicator, CQI), a layer 1 L1 control signaling, a reference signal receiving power (reference signal receiving power, RSRP), a signal to interference plus noise ratio (signal to interference plus noise ratio, SINR), and a codebook indication i1.

Optionally, in the embodiments of this application, the above target time may be explicitly indicated by the first signaling, for example, a time period, a time bitmap (bitmap) and other forms indicate a continuous/discrete time range.

Optionally, in the embodiments of this application, an SRS resource is indicated for at least one of the target multiplexing mode, the target time and the target frequency domain resource when the SRS resource of IAB MT is configured.

Optionally, in the embodiments of this application, when the SRS resource is configured, configuration information of the SRS resource carries the indication information of at least one of the target multiplexing mode, the target time and the target frequency domain resource. Parent DU may train a beam direction for the target multiplexing mode on a corresponding SRS resource.

Optionally, in the embodiments of this application, if the SRS resource is configured at a time corresponding to the target multiplexing mode, the SRS resource is an SRS resource for the target multiplexing mode. The parent DU may train the beam direction for the target multiplexing mode on the corresponding SRS resource.

Optionally, in the embodiments of this application, the DU of the above parent IAB node trains the beam direction for the target multiplexing mode on the SRS resource.

Optionally, in the embodiments of this application, the above first IAB node supports the reporting of a beam-related power control related parameter.

Optionally, in the embodiments of this application, for a downlink power control of the DU of the parent IAB node, power control parameters (i.e., an expected transmission power/an adjusted value of the expected transmission power, e.g., transmit energy per resource element (transmit energy per resource element, EPRE)/power spectral density (power spectral density, PSD)/signal strength) for the first transmit beam direction are reported.

Optionally, in the embodiments of this application, the above first IAB node supports that at least one downlink power control stream is used to report the power control parameters, and each downlink power control stream corresponds to one beam direction.

The power control stream is associated with the beam, which may be used as an implementation of an IAB/parent IAB node, and only a plurality of power control streams are specified in an actual protocol.

Optionally, in the embodiments of this application, the first transmit beam direction and/or the second transmit beam direction to be scheduled by the DU of the above parent IAB node is notified by the parent IAB node to the first IAB node in advance.

It will be understood that the first IAB node may obtain the uplink and downlink beam information of the parent DU in advance, so that the available beams of the IAB DU are determined. The first transmit beam direction (and/or the second transmit beam direction) in the embodiments of this application may be one or more transmit beam directions.

Optionally, in the embodiments of this application, the first transmit beam direction and/or the second transmit beam direction is a beam for at least one of the target multiplexing mode, the target time and the target frequency domain resource.

Optionally, in the embodiments of this application, the first transmit beam direction and/or the second transmit beam direction is notified to the first IAB node through a higher layer signaling, a physical layer signaling, RRC, MAC CE, or downlink control information (downlink control information, DCI) by the above parent IAB node.

Optionally, in the embodiments of this application, a target transmit beam direction indicated in a semi-static (semi-static)/dynamic (dynamic) grant is kept the same as/consistent with a target transmit beam direction to be scheduled/planned to be scheduled by the DU of the parent IAB node (or the target transmit beam direction indicated in the semi-static/dynamic grant may override the target transmit beam direction to be scheduled). The target transmit beam direction includes at least one of the following: the first transmit beam direction and the second transmit beam direction.

Optionally, in the embodiments of this application, the above target indication information is used for indicating uplink or downlink beam information of the DU of the parent IAB node. The above target indication information is obtained in advance by the first IAB node based on a time interval between a scheduling signaling and a scheduling resource. The above target indication information is specifically used for indicating a downlink transmit beam direction of the parent IAB node on the scheduling resource, or an uplink transmit beam direction of the MT of the first IAB node on the scheduling resource. After the first IAB node adjusts the time interval between the scheduling signaling and the scheduling resource, an indication range of the time interval between the scheduling signaling and the scheduling resource is a preset indication range.

It will be understood that the first IAB node may expand the time interval between the scheduling signaling (e.g., DL scheduling DCI) and the scheduling resource, so that the parent DU substantially schedules a transmission resource in advance by using the DCI.

Optionally, in the embodiments of this application, before the parent IAB node sends the target indication information, the first IAB node reports a scheduling readiness time to the parent IAB node. The scheduling readiness time is determined by any one of the following: an agreement in a protocol, a configuration from a network device, and an indication from a CU.

It will be understood that before the parent IAB node sends the target indication information, the first IAB node reports the scheduling readiness time to the parent IAB node, so that the parent IAB determines a scheduling lead time.

Optionally, in the embodiments of this application, the above preset transmission condition includes at least one of the following: the communication channel quality satisfying a minimum CQI requirement, the communication channel quality satisfying a minimum modulation and coding scheme (modulation and coding scheme, MCS) demodulation requirement, and the communication channel quality satisfying a minimum rate requirement.

It will be understood that the uplink and downlink transmissions of IAB DU need to ensure that the interference to the reception of IAB MT is low enough, so as to ensure that the communication channel quality from the parent DU to the IAB MT meets the preset transmission condition (e.g., minimum CQI requirement/minimum MCS demodulation requirement/minimum rate requirement).

Optionally, in the embodiments of this application, the above first preset threshold, the preset offset threshold, and the preset transmission condition are all determined by any one of the following: an agreement in a protocol, a configuration from a network device, and an indication from a parent IAB node.

For example, the CU/parent IAB indicates an upwardly adjusted value of the CQI reported by the IAB MT to indicate the minimum CQI requirement.

Optionally, in the embodiments of this application, the above first condition is specific to the target multiplexing mode and/or the target time.

Optionally, in the embodiments of this application, the above first condition is specifically configured based on a subframe, a slot and a symbol.

Optionally, in the embodiments of this application, the uplink and downlink transmissions of the DU of the first IAB node are not limited by the first condition in a case where the DU of the first IAB node determines that the MT does not perform data reception.

The embodiments of this application provide the IAB indication method in which the first IAB node may report the first signaling to the parent IAB node and/or obtain the target indication information in the case of beam multiplexing between DU and MT. Due to the beam multiplexing between DU and MT, the first IAB node may report the first transmit beam direction and/or the second transmit beam direction to the parent IAB node through the first signaling to lock the receive beam/transmit beam of IAB MT, so as to reserve receive beam resources/transmit beam resources for DU and improve the flexibility and the efficiency of the beam usage of DU and MT, thereby improving the efficiency of the uplink and downlink transmissions; and/or the first IAB node may obtain information such as the first condition, the RS measurement being for the target multiplexing mode, or the uplink or downlink beam information of the DU of the parent IAB node, so as to determine the beam information of the uplink and downlink transmissions of the DU based on such information for determining the beam information of the transmission of IAB MT, so that the interference between DU and MT is avoided, and the flexibility and the efficiency of the beam usage of DU and MT are improved, thereby improving the efficiency of the uplink and downlink transmissions.

In addition, the embodiments of this application further have the effect of interference suppression, and a specific method is as follows.

Optionally, in the embodiments of this application, the first IAB node may report the expected CRI and other transmission parameters to assist the parent DU in scheduling an appropriate downlink beam, so that the interference to the reception of IAB MT is small.

In a method, the first IAB node reports the CRI to the parent IAB based on the UL transmit beam of the DU thereof to ensure that the MT is able to use an appropriate beam for reception, so that the interference of the UL transmission on the MT is small.

In another method, the first IAB node reports the CRI to the parent IAB based on the DL transmit beam of the DU thereof to ensure that the MT is able to use an appropriate beam for reception, so that the interference of the DL transmission on the MT is small.

Optionally, in the embodiments of this application, the first IAB node schedules appropriate transmission parameters such as TCI/SRI to control the interference to the reception of IAB MT.

In a method, the first IAB node schedules an appropriate UL transmit beam to ensure a small interference to the reception of IAB MT.

In another method, the first IAB node schedules an appropriate DL transmit beam to ensure a mall interference to the reception of IAB MT.

Optionally, in the embodiments of this application, the first IAB node reports the expected CRFSRI and other transmission parameters to assist the parent DU in scheduling an appropriate uplink and downlink beams, so as to control the interference to the reception of IAB DU.

In a method, the first IAB node reports the expected CRI to the parent IAB to ensure that the parent DL transmission has a small interference to the reception of IAB DU.

In another method, the first IAB node reports the expected SRI to the parent IAB, or uses an appropriate SRS transmission direction for UL beam training to ensure that the MT is able to use an appropriate beam for transmission, so that the UL transmission of the IAB MT has a small interference to the reception of IAB DU.

Optionally, in the embodiments of this application, the first IAB node schedules an appropriate SRI and other transmission parameters to ensure a small interference to the reception of IAB DU.

In a method, the first IAB node schedules an appropriate UL transmit beam to ensure a small interference to the reception of IAB DU by the parent DL transmission.

In another method, the first IAB node schedules an appropriate UL transmit beam to ensure a small interference to the reception of IAB DU by the parent UL transmission.

In the IAB indication method provided in the embodiments of this application, an executive subject may be an IAB node, or an IAB indication apparatus, or a control module for performing the IAB indication method in the IAB indication apparatus. The IAB indication apparatus provided in the embodiments of this application will be described in an example where the IAB node (i.e., first IAB node) executes the IAB indication method in the embodiments of this application.

FIG. 5 is a schematic possible structural diagram of an IAB indication apparatus involved in the embodiments of this application. As shown in FIG. 5, the IAB indication apparatus 60 may include: a processing module 61.

In the case of the beam multiplexing between DU and MT, the processing module 61 is used for performing at least one of the following: reporting the first signaling to the parent IAB node, and obtaining the target indication information. The first signaling includes at least one of the following: the first transmit beam direction and the second transmit beam direction. The first transmit beam direction is the downlink transmit beam direction of the DU of the parent IAB node, and the second transmit beam direction is the uplink transmit beam direction of the MT of the first IAB node. The first signaling is effective for at least one of the following: the target multiplexing mode, the target time, and the target frequency domain resource. The target multiplexing mode is the multiplexing mode corresponding to the DU of the parent IAB node and the MT of the first IAB node. The target indication information is used for indicating any one of the following: the first condition, the RS measurement being for the target multiplexing mode when resources for measuring RS are configured, and uplink or downlink beam information of the DU of the parent IAB node. The first condition is used for the first IAB node to control the interference to the reception of the MT of the first IAB node. The first condition includes at least one of the following: the first interference being less than or equal to the first preset threshold, the amount of interference variation being less than or equal to the preset offset threshold, and the communication channel quality satisfying the preset transmission condition. The first interference is the interference of the uplink and downlink transmissions of the DU of the first IAB node on the reception of the MT of the first IAB node. The amount of interference variation is the amount of the interference variation of the uplink and downlink transmissions of the DU of the first IAB node on the reception of the MT of the first IAB node. The communication channel quality is the communication channel quality from the DU of the parent IAB node to the MT of the first IAB node during the uplink and downlink transmissions of the DU of the first IAB node.

In a possible implementation, the above target multiplexing mode includes at least one of the following:
the transceiving mode in which DU and MT perform the time division multiplexing;
the mode in which DU and MT perform the frequency division multiplexing;
the mode in which DU and MT perform the space division multiplexing;
the mode in which the transmission of DU and the transmission of MT are performed synchronously;
the mode in which the reception of DU and the reception of MT are performed synchronously;
the mode in which the transmission of DU and the reception of MT are performed synchronously; and
the mode in which the reception of DU and the transmission of MT are performed synchronously.

In a possible implementation, the above processing module 61 is specifically used for reporting the first signaling to the parent IAB node with respect to at least one of the target multiplexing mode, the target time and the target frequency domain resource.

In a possible implementation, a separate field in the above first signaling carries the indication information of at least one of the target multiplexing mode, the target time and the target frequency domain resource.

In a possible implementation, if the time and/or frequency at which the resource for the RS measurement is located corresponds to the target multiplexing mode, the reporting for the RS measurement is for the target multiplexing mode.

In a possible implementation, the target information associated with the first transmit beam direction and/or the second transmit beam direction is reported for the target multiplexing mode. The target information includes at least one of the following: the PMI, the RI, the CQI, the L1 control signaling, the RSRP, the SINR, and the codebook indication i1.

In a possible implementation, the SRS resource is indicated for at least one of the target multiplexing mode, the target time and the target frequency domain resource when the SRS resource of IAB MT is configured.

In a possible implementation, when the SRS resource is configured, the configuration information of the SRS resource carries the indication information of at least one of the target multiplexing mode, the target time and the target frequency domain resource.

In a possible implementation, if the SRS resource is configured at the time corresponding to the target multiplexing mode, the SRS resource is the SRS resource for the target multiplexing mode.

In a possible implementation, the DU of the above parent IAB node trains the beam direction for the target multiplexing mode on the SRS resource.

In a possible implementation, the above first signaling is specifically any one of the following: the UCI and the MAC CE.

In a possible implementation, the first transmit beam direction is any one of the following, and/or the second transmit beam direction is any one of the following:
the beam used/scheduled by the DU of the parent IAB node;
the beam preferentially used/preferentially scheduled by the DU of the parent IAB node;
the beam that is cannot be used/cannot be scheduled by the DU of the parent IAB node; and
the beam low-priority used/low-priority scheduled by the DU of the parent IAB node.

In a possible implementation, the above first IAB node supports the reporting of a beam-related power control related parameter.

In a possible implementation, for the downlink power control of the DU of the parent IAB node, the power control parameters for the first transmit beam direction are reported.

In a possible implementation, the above first IAB node supports that at least one downlink power control stream is used to report the power control parameters, and each downlink power control stream corresponds to one beam direction.

In a possible implementation, the first transmit beam direction and/or the second transmit beam direction to be scheduled by the DU of the above parent IAB node is notified by the parent IAB node to the first IAB node in advance.

In a possible implementation, the first transmit beam direction and/or the second transmit beam direction is the beam for at least one of the target multiplexing mode, the target time and the target frequency domain resource.

In a possible implementation, the first transmit beam direction and/or the second transmit beam direction is notified to the first IAB node through the higher layer signaling, the physical layer signaling, RRC, MAC CE, or the DCI by the above parent IAB node.

In a possible implementation, the target transmit beam direction indicated in the semi-static/dynamic grant is kept the same as the target transmit beam direction to be scheduled by the DU of the parent IAB node. The target transmit beam direction includes at least one of the following: the first transmit beam direction and the second transmit beam direction.

In a possible implementation, the above target indication information is used for indicating the uplink or downlink beam information of the DU of the parent IAB node. The above target indication information is obtained in advance by the first IAB node based on the time interval between the scheduling signaling and the scheduling resource. The above target indication information is specifically used for indicating the downlink transmit beam direction of the parent IAB node on the scheduling resource, or the uplink transmit beam direction of the MT of the first IAB node on the scheduling resource. After the first IAB node adjusts the time interval between the scheduling signaling and the scheduling resource, the indication range of the time interval between the scheduling signaling and the scheduling resource is the preset indication range.

In a possible implementation, before the parent IAB node sends the target indication information, the first IAB node reports the scheduling readiness time to the parent IAB node. The scheduling readiness time is determined by any one of the following: an agreement in a protocol, a configuration from a network device, and an indication from a CU.

In a possible implementation, the above preset transmission condition includes at least one of the following: the communication channel quality satisfying the minimum CQI requirement, the communication channel quality satisfying the minimum MCS demodulation requirement, and the communication channel quality satisfying the minimum rate requirement.

In a possible implementation, the above first preset threshold, the preset offset threshold, and the preset transmission condition are all determined by any one of the following: an agreement in a protocol, a configuration from a network device, and an indication from a parent IAB node.

In a possible implementation, the above first condition is specific to the target multiplexing mode and/or the target time.

In a possible implementation, the above first condition is specifically configured based on a subframe, a slot and a symbol.

In a possible implementation, the uplink and downlink transmissions of the DU of the first IAB node are not limited by the first condition in the case where the DU of the first IAB node determines that the MT does not perform the data reception.

The embodiments of this application provide the IAB indication apparatus. Due to the beam multiplexing between DU and MT, the IAB indication apparatus may report through the beams (i.e., the reporting of the first transmit beam direction and/or the second transmit beam direction) to lock the receive beam/transmit beam of IAB MT, so as to reserve the receive beam resources/the transmit beam resources for DU and improve the flexibility and the efficiency of the beam usage of DU and MT, thereby improving the efficiency of the uplink and downlink transmissions; and/or the IAB indication apparatus may obtain information such as the first condition, the RS measurement being for the target multiplexing mode, or the uplink or downlink beam information of the DU of the parent IAB node, so as to determine the beam information of the uplink and downlink transmissions of the DU based on such information for determining the beam information of the transmission of IAB MT, so that the interference between DU and MT is avoided, and the flexibility and the efficiency of the beam usage of DU and MT are improved, thereby improving the efficiency of the uplink and downlink transmissions.

The IAB indication apparatus in the embodiments of this application may be a apparatus, a device or IAB node with an operating system, or a component, an integrated circuit or a chip in an IAB node. The device or IAB node may be a network device (e.g., an access network device).

The IAB indication apparatus provided in the embodiments of this application is capable of realizing the various processes realized by the above method embodiments and achieving the same technical effects, which will not be repeated herein to avoid repetition.

Optionally, in the embodiments of this application, as shown in FIG. 6, embodiments of this application further provide a communication device 500 including a processor 501, a memory 502, and a program or an instruction stored in the memory 502 and executable on the processor 501. For example, in a case where the communication device 500 is an IAB node, the various processes of the above method embodiments are realized when the program or the instruction is executed by the processor 501, which achieves the same technical effects.

Embodiments of this application further provide an IAB node including a processor and a communication interface. The communication interface is used for reporting the first signaling to the parent IAB node in the case of the beam multiplexing between DU and MT. The first signaling includes at least one of the following: the first transmit beam direction and the second transmit beam direction; the first transmit beam direction is the downlink transmit beam direction of the DU of the parent IAB node, and the second transmit beam direction is the uplink transmit beam direction of the MT of the first IAB node; the first signaling is effective for at least one of the following: the target multiplexing mode, the target time, and the target frequency domain resource; the target multiplexing mode is the multiplexing mode corresponding to DU and MT; and/or the processor is used for obtaining the target indication information in the case of the beam multiplexing between DU and MT. The target indication information is used for indicating any one of the following: the first condition, the RS measurement being for the target multiplexing mode when resources for measuring RS are configured, and uplink or downlink beam information of the DU of the parent IAB node. The first condition is used for the first IAB node to control the interference to the reception of the MT of the first IAB node. The first condition includes at least one of the following: the first interference being less than or equal to the first preset threshold, the amount of interference variation being less than or equal to the preset offset threshold, and the communication channel quality satisfying the preset transmission condition. The first interference is the interference of the uplink and downlink transmissions of the DU of the first IAB node on the reception of the MT of the first IAB node. The amount of interference variation is the amount of the interference variation of the uplink and downlink transmissions of the DU of the first IAB node on the reception of the MT of the first IAB node. The communication channel quality is the communication channel quality from the DU of the parent IAB node to the MT of the first IAB node during the uplink and downlink transmissions of the DU of the first IAB node. The embodiments of the IAB node are corresponding to the above method embodiments of the IAB node. The various implementation processes and implementations of the above method embodiments may all be applied to the embodiments of the IAB node, which are capable of achieving the same technical effects. Specifically, FIG. 6 is a schematic hardware diagram of the IAB node in the embodiments of this application.

Specifically, embodiments of this application further provide an IAB node. As shown in FIG. 7, the IAB node 900 includes an antenna 91, a radio frequency apparatus 92 and a baseband apparatus 93. The antenna 91 is connected to the radio frequency apparatus 92. In an uplink direction, the radio frequency apparatus 92 receives information through the antenna 91, and sends the received information to the baseband apparatus 93 for processing. In a downlink direction, the baseband apparatus 93 processes and sends the information to be sent to the radio frequency apparatus 92. The radio frequency apparatus 92 processes and sends the received information through the antenna 91.

A band processing apparatus may be located in the baseband apparatus 93. The method executed by the IAB node in the above embodiments may be realized in the baseband apparatus 93. The baseband apparatus 93 includes a processor 94 and a memory 95.

The baseband apparatus 93 may, for example, include at least one baseband board provided with a plurality of chips. As shown in FIG. 7, one of the chips is, for example, the processor 94 connected to the memory 95, so as to call a program in the memory 95 to execute the operations of IAB node shown in the above method embodiments.

The baseband apparatus 93 may further include a network interface 96 for interacting with the radio frequency apparatus 92, and this interface is, for example, a common public radio interface (common public radio interface, CPRI).

Specifically, the IAB node in the embodiments of the present disclosure further includes: an instruction or a program stored in the memory 95 and executable on the processor 94. The processor 94 invokes the instruction or the program in the memory 95 to execute the method performed by the modules shown in FIG. 6, so as to achieve the same technical effects, which will not be repeated herein to avoid repetition.

The IAB node provided in the embodiments of this application is capable of realizing the various processes realized in the above method embodiments and achieving the same technical effects, which will not be repeated herein to avoid repetition.

Embodiments of this application further provide a readable storage medium. The readable storage medium stores a program or an instruction, and when the program or the instruction is executed by a processor, the various processes of the embodiments of the above IAB indication method are implemented, and the same technical effects can be achieved, which will not be repeated herein to avoid repetition.

The processor is the processor in the IAB node in the above embodiments. The readable storage medium includes a computer readable storage medium such as a computer read-only memory (read-only memory, ROM), a random access memory (random access memory, RAM), a disk or an optical disk.

Embodiments of this application additionally provide a chip. The chip includes a processor and a communication interface, and the communication interface is coupled to the processor. The processor is used for executing a program or an instruction for realizing the various processes in the embodiments of the IAB indication method, and is capable of achieving the same technical effects, which will not be repeated herein to avoid repetition.

It will be understood that the chip described in the embodiments of this application may also be referred to as a system-level chip, a system chip, a chip system, or a system-on-chip.

The term such as "include", "comprises" or any other variant thereof herein is intended to cover non-exclusive inclusion, so that a process, method, article, or device that includes a series of elements includes not only those elements but also other elements that are not expressly listed or elements that are inherent to such process, method, article or device. Without further limitation, an element defined by the phrase "including a..." does not exclude an existence of another element of the same type in a process, method, article, or device that includes this element. In addition, it will be pointed that the scope of the method and the scope of device in the embodiments of this application are not limited to performing functions in an order shown or discussed, but may also include performing the functions in a substantially contemporaneous manner or in a reverse order according to the functions involved. For example, the described method may be performed in an order different from the order described, and various steps may further be added, omitted, or combined. In addition, features described with reference to some examples may be combined in other examples.

By the above description of the embodiments, it is clear to those skilled in the art that the method in the above embodiments may be realized with the aid of software plus the necessary general hardware platform, or of course by means of hardware, but in many cases, the former is a preferred implementation. Based on this understanding, the technical solution of this application may be embodied essentially or in part as a contribution to related art in the form of a computer software product. The computer software product is stored in a storage medium (e.g., ROM/RAM, disk, optical disk), which includes a number of instructions to cause a terminal (which may be a cell phone, a computer, a server, an air-conditioner, or a networked device) to execute the method in the various embodiments of this application.

The embodiments of this application are described above with reference to the accompanying drawings, but this application is not limited to the above specific embodiments. The above specific embodiments are merely schematic and not limiting. Without departing from the purpose of this application and the protection scope of the claims, a person of ordinary skill in the art, inspired by this application, may further make many forms, all of which are within the protection of this application.

## Claims

1. An integrated access backhaul IAB indication method, comprising:
in a case of beam multiplexing between a distributed unit DU and a mobile termination MT, performing, by a first IAB node, at least one of: reporting a first signaling to a parent IAB node, and obtaining target indication information; wherein
the first signaling comprises at least one of: a first transmit beam direction and a second transmit beam direction; the first transmit beam direction being a downlink transmit beam direction of DU of the parent IAB node, and the second transmit beam direction being an uplink transmit beam direction of MT of the first IAB node; the first signaling being effective for at least one of: a target multiplexing mode, a target time, and a target frequency domain resource; the target multiplexing mode being a multiplexing mode corresponding to the DU of the parent IAB node and the MT of the first IAB node; and
the target indication information is used for indicating any one of: a first condition, a reference signal RS measurement being for the target multiplexing mode when resources for measuring a RS are configured, and uplink or downlink beam information of the DU of the parent IAB node;
the first condition being used for the first IAB node to control an interference to a reception of the MT of the first IAB node; the first condition comprising at least one of: a first interference being less than or equal to a first preset threshold, an amount of interference variation being less than or equal to a preset offset threshold, and a communication channel quality satisfying a preset transmission condition; the first interference being an interference of uplink and downlink transmissions of DU of the first IAB node on the reception of the MT of the first IAB node; the amount of interference variation being an amount of interference variation of the uplink and downlink transmissions of the DU of the first IAB node on the reception of the MT of the first IAB node; and the communication channel quality being a communication channel quality from the DU of the parent IAB node to the MT of the first IAB node during the uplink and downlink transmissions of the DU of the first IAB node.

2. The method according to claim 1, wherein the target multiplexing mode comprises at least one of:
a transceiving mode in which the DU and the MT perform time division multiplexing;
a mode in which the DU and the MT perform frequency division multiplexing;
a mode in which the DU and the MT perform space division multiplexing;
a mode in which a transmission of the DU and a transmission of the MT are performed synchronously;
a mode in which a reception of the DU and a reception of the MT are performed synchronously;
a mode in which the transmission of the DU and the reception of the MT are performed synchronously; and
a mode in which the reception of the DU and the transmission of the MT are performed synchronously.

3. The method according to claim 1 or 2, wherein reporting the first signaling to the parent IAB node, comprises:
reporting the first signaling to the parent IAB node with respect to at least one of the target multiplexing mode, the target time and the target frequency domain resource.

4. The method according to claim 3, wherein a separate field in the first signaling carries indication information of at least one of the target multiplexing mode, the target time, and the target frequency domain resource.

5. The method according to claim 1, wherein if a time and/or a frequency at which a resource for the RS measurement is located corresponds to the target multiplexing mode, reporting for the RS measurement is for the target multiplexing mode.

6. The method according to claim 1, wherein target information associated with the first transmit beam direction and/or the second transmit beam direction is reported for the target multiplexing mode; and
the target information comprises at least one of: a precoding matrix indicator PMI, a rank indication RI, a channel quality indicator CQI, an L1 control signaling, a reference signal receiving power RSRP, a signal to interference plus noise ratio SINR, and a codebook indication i1.

7. The method according to claim 1, wherein when a sounding reference signal SRS resource of an IAB MT is configured, the SRS resource is indicated for at least one of the target multiplexing mode, the target time and the target frequency domain resource.

8. The method according to claim 7, wherein when the SRS resource is configured, configuration information of the SRS resource carries indication information of at least one of the target multiplexing mode, the target time and the target frequency domain resource.

9. The method according to claim 7, wherein if the SRS resource is configured at a time corresponding to the target multiplexing mode, the SRS resource is an SRS resource for the target multiplexing mode.

10. The method according to claim 8 or 9, wherein the DU of the parent IAB node trains a beam direction for the target multiplexing mode on the SRS resource.

11. The method according to claim 1, wherein the first signaling is specifically any one of: uplink control information UCI and media access control control element MAC CE.

12. The method according to claim 1, wherein the first transmit beam direction and/or the second transmit beam direction is any one of:
a beam used/scheduled by the DU of the parent IAB node;
a beam preferentially used/preferentially scheduled by the DU of the parent IAB node;
a beam that is unusable/unschedulable by the DU of the parent IAB node; and
a beam low-priority used/low-priority scheduled by the DU of the parent IAB node.

13. The method according to claim 1, wherein the first IAB node supports reporting of a beam-related power control related parameter.

14. The method according to claim 13, wherein for a downlink power control of the DU of the parent IAB node, power control parameters for the first transmit beam direction are reported.

15. The method according to claim 13 or 14, wherein the first IAB node supports that at least one downlink power control stream is used to report the power control parameters, and each downlink power control stream corresponds to one beam direction.

16. The method according to claim 1, wherein the first transmit beam direction and/or the second transmit beam direction to be scheduled by the DU of the parent IAB node is notified by the parent IAB node to the first IAB node in advance.

17. The method according to claim 16, wherein the first transmit beam direction and/or the second transmit beam direction is a beam for at least one of the target multiplexing mode, the target time and the target frequency domain resource.

18. The method according to claim 16 or 17, wherein the first transmit beam direction and/or the second transmit beam direction is notified to the first IAB node through a higher layer signaling, a physical layer signaling, a radio resource control RRC, MAC CE, or downlink control information DCI by the parent IAB node.

19. The method according to claim 16 or 17, wherein a target transmit beam direction indicated in a semi-static/dynamic grant is kept same as a target transmit beam direction to be scheduled by the DU of the parent IAB node; and the target transmit beam direction comprises at least one of: the first transmit beam direction and the second transmit beam direction.

20. The method according to claim 1, wherein the target indication information is used for indicating uplink or downlink beam information of the DU of the parent IAB node;
the target indication information is obtained in advance by the first IAB node based on a time interval between a scheduling signaling and a scheduling resource; and the target indication information is specifically used for indicating a downlink transmit beam direction of the parent IAB node on the scheduling resource, or an uplink transmit beam direction of the MT of the first IAB node on the scheduling resource; wherein
after the first IAB node adjusts the time interval between the scheduling signaling and the scheduling resource, an indication range of the time interval between the scheduling signaling and the scheduling resource is a preset indication range.

21. The method according to claim 20, wherein before the parent IAB node sends the target indication information, the first IAB node reports a scheduling readiness time to the parent IAB node; the scheduling readiness time being determined by any one of: an agreement in a protocol, a configuration from a network device, and an indication from a central unit CU.

22. The method according to claim 1, wherein the preset transmission condition comprises at least one of: the communication channel quality satisfying a minimum channel quality indicator CQI requirement, the communication channel quality satisfying a minimum modulation and coding scheme MCS demodulation requirement, and the communication channel quality satisfying a minimum rate requirement.

23. The method according to claim 1 or 22, wherein the first preset threshold, the preset offset threshold, and the preset transmission condition are each determined by any one of: an agreement in a protocol, a configuration from a network device, and an indication from a parent IAB node.

24. The method according to claim 1, wherein the first condition is specific to the target multiplexing mode and/or the target time.

25. The method according to claim 24, wherein the first condition is specifically configured based on a subframe, a slot and a symbol.

26. The method according to claim 1, wherein the uplink and downlink transmissions of the DU of the first IAB node are not limited by the first condition in a case where the DU of the first IAB node determines that the MT does not perform data reception.

27. An integrated access backhaul IAB indication apparatus, comprising: a processing module; wherein
in a case of beam multiplexing between distributed unit DU and mobile termination MT, the processing module is used for performing at least one of: reporting a first signaling to a parent IAB node, and obtaining target indication information; wherein
the first signaling comprises at least one of: a first transmit beam direction and a second transmit beam direction; the first transmit beam direction being a downlink transmit beam direction of DU of the parent IAB node, and the second transmit beam direction being an uplink transmit beam direction of MT of the first IAB node; the first signaling being effective for at least one of: a target multiplexing mode, a target time, and a target frequency domain resource; the target multiplexing mode being a multiplexing mode corresponding to the DU of the parent IAB node and the MT of the first IAB node; and
the target indication information is used for indicating any one of: a first condition, a reference signal RS measurement being for the target multiplexing mode when resources for measuring a RS are configured, and uplink or downlink beam information of the DU of the parent IAB node;
the first condition being used for the first IAB node to control an interference to a reception of the MT of the first IAB node; the first condition comprising at least one of: a first interference being less than or equal to a first preset threshold, an amount of interference variation being less than or equal to a preset offset threshold, and a communication channel quality satisfying a preset transmission condition; the first interference being an interference of uplink and downlink transmissions of DU of the first IAB node on the reception of the MT of the first IAB node; the amount of interference variation being an amount of interference variation of the uplink and downlink transmissions of the DU of the first IAB node on the reception of the MT of the first IAB node; and the communication channel quality being a communication channel quality from the DU of the parent IAB node to the MT of the first IAB node during the uplink and downlink transmissions of the DU of the first IAB node.

28. An integrated access backhaul IAB node, comprising a processor, a memory, and a program or an instruction stored in the memory and executable on the processor, wherein when the program or the instruction is executed by the processor, steps of the IAB indication method according to any one of claims 1 to 26 are implemented.

29. A readable storage medium, storing a program or an instruction, wherein when the program or the instruction is executed by a processor, steps of the integrated access backhaul IAB indication method according to any one of claims 1 to 26 are implemented.

30. A computer program product, wherein when the program product is executed by at least one processor, the integrated access backhaul IAB indication method according to any one of claims 1 to 26 are implemented.

31. An integrated access backhaul IAB node, comprising an IAB node configured to perform the IAB indication method according to any one of claims 1 to 26.
